# EUROPEAN PATENT APPLICATION

(11) **EP 4 560 998 A1**
(43) Date of publication of application: **28.05.2025**
(21) Application number: 22952584.5
(22) Date of filing: 29.07.2022
(51) Int. Cl.: H04L 27/00

(54) **PACKET SENDING METHOD AND APPARATUS, AND PACKET RECEIVING METHOD AND APPARATUS**

(71) Applicant: Huawei Technologies Co., Ltd., Shenzhen, Guangdong 518129 (CN)
(72) Inventor: ZHANG, Xudong, Shenzhen, Guangdong 518129 (CN); LIU, Guoquan, Shenzhen, Guangdong 518129 (CN); TANG, Weiping, Shenzhen, Guangdong 518129 (CN); WANG, Yali, Shenzhen, Guangdong 518129 (CN); WANG, Jian, Shenzhen, Guangdong 518129 (CN)
(74) Representative: Thun, Clemens
(86) International application number: PCT/CN2022/109270
(87) International publication number: WO 2024/021139

(57) **Abstract**

A packet sending and receiving method and an apparatus are provided. The method includes: A source node sends a first packet, where a packet header of the first packet carries a network address of a first intermediate node accessed by a destination node, and a routing header of the first packet carries a network address of the destination node; and after the node receives the first packet, if a network address of the node is not the network address of the first intermediate node, the node sends the first packet; or if a network address of the node is the network address of the first intermediate node, the node updates a destination address in the packet header of the first packet based on the network address of the destination node carried in the routing header, and sends an updated first packet. The method can better support packet forwarding in a scenario in which an end node in network communication moves, thereby reducing a quantity of intermediate nodes that need to sense a topology change in a network.

## Description

### TECHNICAL FIELD

This application relates to the communication field, and in particular, to a packet sending and receiving method and an apparatus.

### BACKGROUND

In network communication, a data packet at a network layer starts from a source node, passes through at least one intermediate node, and arrives at a destination node, where an ordered node set of the at least one intermediate node through which the data packet passes is referred to as a forwarding path of the data packet.

The source node or the destination node may move, especially in wireless network communication. In addition, when an end node in a network moves, the entire network needs to sense a topology change caused by the movement of the end node, to send the packet.

### SUMMARY

This application discloses a packet sending and receiving method and an apparatus, to better support packet forwarding in a scenario in which an end node in network communication moves, and help reduce a quantity of intermediate nodes that need to sense a topology change in a network.

According to a first aspect, this application provides a packet sending method, where the method is applied to a first node, and the method includes: receiving a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and when a network address of the first node is not the network address of the first intermediate node, sending the first packet; or when a network address of the first node is the network address of the first intermediate node, updating a network address indicated by the first destination address field from the network address of the first intermediate node to the network address of the destination node based on the second destination address field, to generate a second packet; and sending the second packet.

The first node may be a network device having a routing and forwarding capability, for example, may be a wireless network device, or may be a router, a layer 3 switch (or referred to as a multilayer switch), or may be a component that can implement the foregoing method and that is used in the network device, and the component may be, for example, an integrated circuit, a line card, or a chip.

Herein, the second packet is the first packet obtained after the network address indicated by the first destination address field in the packet header is changed.

In the method, the first destination address field in the packet header indicates the network address of the first intermediate node accessed by the destination node, that is, a network location or an access location of the destination node may be determined based on the first destination address field in the packet header, and the network address of the destination node at which the packet finally arrives is carried in a next extension header (that is, the routing header) of the packet header. In this way, routing and addressing in a scenario in which an end node in a network moves can be better supported, and only the intermediate node directly connected to the end node senses a topology change caused by movement of the end node, instead of that the entire network senses the topology change caused by movement of the end node in the conventional routing. Therefore, a quantity of intermediate nodes that need to sense the topology change in the network is reduced.

Optionally, the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

In the foregoing implementation, the source node can timely obtain, from the address resolver node, the network address of the first intermediate node accessed by the destination node. In this way, even if the destination node moves, the source node may quickly determine the network location or the access location (that is, the network address of the first intermediate node accessed by the destination node) of the destination node based on information fed back by the address resolver node, so that packet forwarding in the scenario in which an end node moves can be well supported.

Optionally, the routing header further includes a routing type field, and the routing type field indicates a type of the routing header.

In the foregoing implementation, the type of the routing header may be extended based on the routing type field, to support different routing header types.

Optionally, the type of the routing header is that the routing header includes a source location identifier field, and the source location identifier field is used by the destination node to reversely address the source node.

In the foregoing implementation, a type of the routing header including the source location identifier field is extended, and an access location or a network location of the source node can be quickly determined based on the source location identifier field.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

In the foregoing implementation, the source location identifier field is used, so that the destination node can quickly reversely address the source node. This helps the destination node quickly reply to the source node.

Optionally, the routing header further includes a third destination address field and a segment left field, the segment left field is set to a first value, the first value corresponds to the third destination address field, and the third destination address field indicates the network address of the first intermediate node; and the updating a network address indicated by the first destination address field from the network address of the first intermediate node to the network address of the destination node based on the second destination address field includes: changing the first value to a second value, and determining that the second value corresponds to the second destination address field; and updating the network address indicated by the first destination address field from the network address of the first intermediate node to the network address of the destination node based on the second destination address field.

In the foregoing implementation, the first intermediate node may obtain the network address of the destination node from the routing header by changing the value of the segment left field, and update the network address of the destination node to the first destination address field in the packet header, so that the packet can be sent to the destination node.

Optionally, the sending the first packet includes: sending the first packet based on a first forwarding entry, where the first forwarding entry records a correspondence between the network address of the first intermediate node, an out interface identifier of the first node, a next hop layer 2 identifier of the first node, a transport channel identifier TCID of the first node, and a logical channel identifier LCID of the first node.

For example, the TCID and the LCID may be predefined in a SparkLink communication system, and are used for encapsulation and sending of a packet at a bottom layer (for example, a wireless basic service layer in a SparkLink network).

In the foregoing implementation, the first packet may be forwarded based on the first forwarding entry.

Optionally, the sending a second packet includes: sending the second packet based on a second forwarding entry, where the second forwarding entry records a correspondence between the network address of the destination node, the out interface identifier of the first node, the next hop layer 2 identifier of the first node, the transport channel identifier TCID of the first node, and the logical channel identifier LCID of the first node.

In the foregoing implementation, the second packet may be forwarded based on the second forwarding entry.

Optionally, the first forwarding entry or the second forwarding entry is obtained from a forwarding table, and the forwarding table is obtained based on an adjacency table for the first node and a routing table for the first node.

Herein, the first forwarding entry is a forwarding entry that corresponds to the network address of the first intermediate node and that is found by the first node from the forwarding table based on the network address of the first intermediate node indicated by the first destination address field in the packet header of the first packet. The second forwarding entry is a forwarding entry that corresponds to the network address of the destination node and that is found by the first node from the forwarding table based on the network address of the destination node indicated by the first destination address field in a packet header of the second packet.

In the foregoing implementation, the forwarding entry in this application is obtained based on a local adjacency table and routing table for a node, so that packet forwarding in a network can be guided.

Optionally, at least one of a length of the network address of the destination node and a length of the network address of the first intermediate node is 2 bytes.

It can be learned that a network address of each node in this application is a short address of a network layer, and may be used for addressing in a corresponding communication system. For example, in the SparkLink communication system, a type of a network address of a node may be a SparkLink network address. It may be understood that the SparkLink network address is another address type different from an IP address. Network addresses carried in the routing header and the packet header each have a much smaller length than an IPv4 address with a length of 32 bits and an IPv6 address with a length of 128 bits. This greatly reduces overheads of the packet header and the routing header, and helps increase a proportion of data carried in a packet.

According to a second aspect, this application provides a packet sending method, applied to a source node, where the method includes: obtaining a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and sending the first packet.

The source node may be an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a component (for example, a chip or an integrated circuit) included in the independent device, or may be any possible intelligent terminal device (like a mobile phone), intelligent transportation device (like a vehicle or an uncrewed aerial vehicle), intelligent manufacturing device, smart home device (like a large screen or a speaker), or the like; or may be a component that can implement the foregoing method and that is used in the foregoing electronic device, and the component may be, for example, an integrated circuit, a line card, or a chip.

For example, the obtaining a first packet may be generating the first packet.

In the foregoing method, the source node carries, based on the packet header of the generated first packet, the network address of the first intermediate node accessed by the destination node, and the routing header carries the network address of the destination node at which the first packet finally arrives. In this way, routing and addressing in a scenario in which an end node in a network moves can be better supported. When the destination node moves, only the intermediate node directly connected to the destination node senses a topology change caused by movement of the destination node, instead of that the entire network senses the topology change caused by movement of the end node in the conventional routing. Therefore, the packet header carries the network address of the first intermediate node accessed by the destination node. This can effectively reduce a quantity of intermediate nodes that need to sense the topology change in the network.

Optionally, before the obtaining a first packet, the method further includes: sending an address request message to an address resolver node, where the address request message carries the network address of the destination node; receiving an address feedback message sent by the address resolver node, where the address feedback message includes a first mapping relationship between the network address of the destination node and the network address of the first intermediate node, and the first mapping relationship indicates that the destination node is connected to the first intermediate node; and obtaining the network address of the first intermediate node from the first mapping relationship, where the network address of the first intermediate node is used to generate the first packet.

In the foregoing implementation, the source node can timely obtain, from the address resolver node, the network address of the first intermediate node accessed by the destination node. Because the intermediate node in the network generally does not move, only the intermediate node directly connected to the end node may sense a change of the end node and update a connection relationship to the address resolver node. In this way, even if the destination node moves, the source node may quickly determine a network location or an access location (that is, the network address of the first intermediate node accessed by the destination node) of the destination node based on information fed back by the address resolver node, so that packet forwarding in the scenario in which an end node moves can be well supported.

Optionally, the routing header further includes a routing type field, and the routing type field indicates a type of the routing header.

Optionally, the type of the routing header is that the routing header includes a source location identifier field, and the source location identifier field is used by the destination node to reversely address the source node.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

For specific technical effect of the foregoing fields, refer to descriptions of corresponding fields in the first aspect. Details are not described herein again.

Optionally, that the source node sends the first packet includes: The source node determines a next hop of the source node based on a forwarding entry, where the forwarding entry records a correspondence between the network address of the first intermediate node, an out interface identifier of the source node, a next hop layer 2 identifier of the source node, a transport channel identifier TCID of the source node, and a logical channel identifier LCID of the source node; and sends the first packet to the next hop of the source node.

For example, the TCID and the LCID may be predefined in a SparkLink communication system, and are used for encapsulation and sending of a packet at a bottom layer (for example, a wireless basic service layer in a SparkLink network).

In the foregoing implementation, the first packet may be forwarded based on the forwarding entry defined in this application.

Optionally, the forwarding entry is obtained from a forwarding table based on the network address of the first intermediate node, and the forwarding table is obtained based on an adjacency table for the source node and a routing table for the source node.

In the foregoing implementation, packet forwarding in the network can be guided based on the forwarding entry defined in this application.

Optionally, the routing header further includes a third destination address field and a segment left field, when the segment left field is set to a first value, the first value corresponds to the third destination address field, and the third destination address field indicates the network address of the first intermediate node; and the routing header indicates the first intermediate node to change a value of the segment left field from the first value to a second value, and update a network address indicated by the first destination address field to the network address of the destination node based on the second destination address field corresponding to the second value.

In the foregoing implementation, the first intermediate node may obtain the network address of the destination node from the routing header by changing the value of the segment left field, and update the network address of the destination node to the first destination address field in the packet header, so that the packet can be sent to the destination node.

Optionally, at least one of a length of the network address of the destination node and a length of the network address of the first intermediate node is 2 bytes.

For technical effect of this feature, refer to descriptions of technical effect of corresponding features in the first aspect. Details are not described herein again.

According to a third aspect, this application provides a packet receiving method, where the method includes: A destination node receives a first packet, where the first packet includes a packet header and a routing header, a first destination address field in the packet header indicates a network address of the destination node, a second destination address field in the routing header indicates the network address of the destination node, a network address indicated by the first destination address field is updated from a network address of a first intermediate node to the network address of the destination node, and the first intermediate node is an intermediate node that establishes a communication connection to the destination node; and parses the first packet.

The destination node may be an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a component (for example, a chip or an integrated circuit) included in the independent device, or may be any possible intelligent terminal device (like a mobile phone), intelligent transportation device (like a vehicle or an uncrewed aerial vehicle), intelligent manufacturing device, smart home device (like a large screen or a speaker), or the like; or may be a component that can implement the foregoing method and that is used in the foregoing electronic device, and the component may be, for example, an integrated circuit, a line card, or a chip.

In the foregoing method, the first packet is sent from a source node to the destination node based on the packet header and the routing header in the packet. In addition, the network address of the destination node carried in the routing header of the packet is used to update the destination address in the packet header of the packet, to implement forwarding. This can better support routing and addressing in a scenario in which an end node in a network moves, and help reduce a quantity of intermediate nodes that need to sense a topology change in the network.

Optionally, the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

Optionally, the routing header further includes a routing type field, and the routing type field indicates a type of the routing header.

Optionally, the type of the routing header is that the routing header includes a source location identifier field, and the source location identifier field is used by the destination node to reversely address the source node.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

For specific technical effect of the foregoing fields, refer to descriptions of technical effect of corresponding fields in the first aspect. Details are not described herein again.

Optionally, when the routing header of the first packet includes the source location identifier field, the method further includes: obtaining, from the source location identifier field, the network address of the second intermediate node connected to the source node; and sending a third packet based on the network address of the second intermediate node, so that the second intermediate node forwards the third packet to the source node, where the third packet is a response to the first packet.

In the foregoing implementation, the destination node may directly obtain, from the source location identifier field in the routing header of the first packet, the network address of the second intermediate node accessed by the source node, to facilitate reverse addressing of the destination node.

Optionally, when the routing header of the first packet does not include the source location identifier field, the method further includes:
obtaining, from the address resolver node, the network address of the second intermediate node connected to the source node; and sending a third packet based on the network address of the second intermediate node, so that the second intermediate node forwards the third packet to the source node, where the third packet is a response to the first packet.

In the foregoing implementation, the destination node may obtain, from the address resolver node, the network address of the second intermediate node accessed by the source node, to facilitate reverse addressing of the destination node.

Optionally, the routing header further includes a third destination address field and a segment left field, when the segment left field is set to a first value, the first value corresponds to the third destination address field, and the third destination address field indicates the network address of the first intermediate node; and the routing header indicates the first intermediate node to change a value of the segment left field from the first value to a second value, and update the network address indicated by the first destination address field to the network address of the destination node based on the second destination address field corresponding to the second value.

For technical effect of this feature, refer to descriptions of technical effect of corresponding features in the first aspect. Details are not described herein again.

Optionally, at least one of a length of the network address of the destination node and a length of the network address of the first intermediate node is 2 bytes.

For technical effect of this feature, refer to descriptions of technical effect of corresponding features in the first aspect. Details are not described herein again.

According to a fourth aspect, this application provides a communication apparatus, where the apparatus is a first node or the apparatus is included in the first node, and the apparatus includes: a receiving unit, configured to receive a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and a sending unit, configured to: when a network address of the first node is not the network address of the first intermediate node, send the first packet; or a processing unit, configured to: when a network address of the first node is the network address of the first intermediate node, update a network address indicated by the first destination address field from the network address of the first intermediate node to the network address of the destination node based on the second destination address field, to generate a second packet, where the sending unit is configured to send the second packet.

Optionally, the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

Optionally, the routing header further includes a routing type field, and the routing type field indicates a type of the routing header.

Optionally, the type of the routing header is that the routing header includes a source location identifier field, and the source location identifier field is used by the destination node to reversely address the source node.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

Optionally, the routing header further includes a third destination address field and a segment left field, the segment left field is set to a first value, the first value corresponds to the third destination address field, and the third destination address field indicates the network address of the first intermediate node; and the processing unit is specifically configured to: change a value of the segment left field from the first value to a second value, and determine that the second value corresponds to the second destination address field; and update the network address indicated by the first destination address field from the network address of the first intermediate node to the network address of the destination node based on the second destination address field.

Optionally, the sending unit is specifically configured to: send the first packet based on a first forwarding entry, where the first forwarding entry records a correspondence between the network address of the first intermediate node, an out interface identifier of the first node, a next hop layer 2 identifier of the first node, a transport channel identifier TCID of the first node, and a logical channel identifier LCID of the first node.

Optionally, the sending unit is specifically configured to: send the second packet based on a second forwarding entry, where the second forwarding entry records a correspondence between the network address of the destination node, the out interface identifier of the first node, the next hop layer 2 identifier of the first node, the transport channel identifier TCID of the first node, and the logical channel identifier LCID of the first node.

Optionally, the first forwarding entry or the second forwarding entry is obtained from a forwarding table, and the forwarding table is obtained based on an adjacency table for the first node and a routing table for the first node.

Optionally, at least one of a length of the network address of the destination node and a length of the network address of the first intermediate node is 2 bytes.

According to a fifth aspect, this application provides a communication apparatus, where the apparatus is a source node or the apparatus is included in the source node, and the apparatus includes: an obtaining unit, configured to obtain a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and a sending unit, configured to send the first packet.

Optionally, the sending unit is further configured to send an address request message to an address resolver node, where the address request message carries the network address of the destination node; the apparatus further includes a receiving unit, configured to receive an address feedback message sent by the address resolver node, where the address feedback message includes a first mapping relationship between the network address of the destination node and the network address of the first intermediate node, and the first mapping relationship indicates that the destination node is connected to the first intermediate node; and the obtaining unit is further configured to obtain the network address of the first intermediate node from the first mapping relationship, where the network address of the first intermediate node is used to generate the first packet.

Optionally, the routing header further includes a routing type field, and the routing type field indicates a type of the routing header.

Optionally, the type of the routing header is that the routing header includes a source location identifier field, and the source location identifier field is used by the destination node to reversely address the source node.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

Optionally, the sending unit is specifically configured to: determine a next hop of the source node based on a forwarding entry, where the forwarding entry records a correspondence between the network address of the first intermediate node, an out interface identifier of the source node, a next hop layer 2 identifier of the source node, a transport channel identifier TCID of the source node, and a logical channel identifier LCID of the source node; and send the first packet to the next hop of the source node.

Optionally, the forwarding entry is obtained from a forwarding table based on the network address of the first intermediate node, and the forwarding table is obtained based on an adjacency table for the source node and a routing table for the source node.

Optionally, the routing header further includes a third destination address field and a segment left field, when the segment left field is set to a first value, the first value corresponds to the third destination address field, and the third destination address field indicates the network address of the first intermediate node; and the routing header indicates the first intermediate node to change a value of the segment left field from the first value to a second value, and update a network address indicated by the first destination address field to the network address of the destination node based on the second destination address field corresponding to the second value.

Optionally, at least one of a length of the network address of the destination node and a length of the network address of the first intermediate node is 2 bytes.

According to a sixth aspect, this application provides a communication apparatus, where the apparatus is a destination node or the apparatus is included in the destination node, and the apparatus includes: a receiving unit, configured to receive a first packet, where the first packet includes a packet header and a routing header, a first destination address field in the packet header indicates a network address of the destination node, a second destination address field in the routing header indicates the network address of the destination node, a network address indicated by the first destination address field is updated from a network address of a first intermediate node to the network address of the destination node, and the first intermediate node is an intermediate node that establishes a communication connection to the destination node; and a processing unit, configured to parse the first packet.

Optionally, the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

Optionally, the routing header further includes a routing type field, and the routing type field indicates a type of the routing header.

Optionally, the type of the routing header is that the routing header includes a source location identifier field, and the source location identifier field is used by the destination node to reversely address the source node.

Optionally, when the source node is an end node in a network, the source location identifier field indicates a network address of a second intermediate node, where the second intermediate node is an intermediate node that establishes a communication connection to the source node; or when the source node is an intermediate node in a network, the source location identifier field indicates a network address of the source node.

Optionally, the apparatus further includes a sending unit; the processing unit is configured to: when the routing header of the first packet includes the source location identifier field, obtain, from the source location identifier field, the network address of the second intermediate node connected to the source node; and the sending unit is configured to send a third packet based on the network address of the second intermediate node, so that the second intermediate node forwards the third packet to the source node, where the third packet is a response to the first packet.

Optionally, the processing unit is configured to: when the routing header of the first packet does not include the source location identifier field, obtain, from the address resolver node, the network address of the second intermediate node connected to the source node; and the sending unit is further configured to send a third packet based on the network address of the second intermediate node, so that the second intermediate node forwards the third packet to the source node, where the third packet is a response to the first packet.

Optionally, the routing header further includes a third destination address field and a segment left field, when the segment left field is set to a first value, the first value corresponds to the third destination address field, and the third destination address field indicates the network address of the first intermediate node; and the routing header indicates the first intermediate node to change a value of the segment left field from the first value to a second value, and update the network address indicated by the first destination address field to the network address of the destination node based on the second destination address field corresponding to the second value.

Optionally, at least one of a length of the network address of the destination node and a length of the network address of the first intermediate node is 2 bytes.

According to a seventh aspect, this application provides a communication apparatus. The apparatus includes a processor and a memory. The memory is configured to store program instructions. The processor invokes the program instructions in the memory, so that the apparatus performs the method in the first aspect or any one of the possible implementations of the first aspect, or the apparatus performs the method in the second aspect or any one of the possible implementations of the second aspect, or the apparatus performs the method in the third aspect or any one of the possible implementations of the third aspect.

According to an eighth aspect, this application provides a computer-readable storage medium, including computer instructions. When the computer instructions are run by a processor, the method according to the first aspect or any one of the possible implementations of the first aspect is implemented, or the method according to the second aspect or any one of the possible implementations of the second aspect is implemented, or the method according to the third aspect or any one of the possible implementations of the third aspect is implemented.

According to a ninth aspect, this application provides a computer program product. When the computer program product is executed by a processor, the method according to the first aspect or any one of the possible implementations of the first aspect is implemented, or the method according to the second aspect or any one of the possible implementations of the second aspect is implemented, or the method according to the third aspect or any one of the possible implementations of the third aspect is implemented.

For example, the computer program product may be a software installation package.

According to a tenth aspect, this application provides a vehicle. The vehicle includes the apparatus according to the fourth aspect or any one of the possible implementations of the fourth aspect, or includes the apparatus according to the fifth aspect or any one of the possible implementations of the fifth aspect, or includes the apparatus according to the seventh aspect or any one of the possible implementations of the seventh aspect.

According to an eleventh aspect, this application provides a terminal. The terminal includes the apparatus according to the fourth aspect or any one of the possible implementations of the fourth aspect, or includes the apparatus according to the fifth aspect or any one of the possible implementations of the fifth aspect, or includes the apparatus according to the seventh aspect or any one of the possible implementations of the seventh aspect.

Examples of the terminal include but are not limited to: a smart home device (for example, a television, a floor scanning robot, a smart desk lamp, a speaker system, an intelligent lighting system, an electrical control system, home background music, a home theater system, an intercom system, and video surveillance), an intelligent transportation device (for example, an automobile, a ship, an uncrewed aerial vehicle, a train, a truck, and a truck), an intelligent manufacturing device (for example, a robot, an industrial device, smart logistics, and a smart factory), and a smart terminal (a mobile phone, a computer, a tablet, a palmtop computer, a desktop computer, a headset, a speaker, a wearable device, a vehicle-mounted device, a virtual reality device, an augmented reality device, and the like).

### BRIEF DESCRIPTION OF DRAWINGS

FIG. 1 is a diagram of an architecture of a communication system according to an embodiment of this application;
FIG. 2A is a diagram of a format of a routing header according to an embodiment of this application;
FIG. 2B is a diagram of a format of another routing header according to an embodiment of this application;
FIG. 3 is a schematic of a topology in a network according to an embodiment of this application;
FIG. 4 is a schematic flowchart of a packet sending method according to an embodiment of this application;
FIG. 5A is a diagram of formats of a packet header and a routing header in a first packet according to an embodiment of this application;
FIG. 5B is a diagram of formats of a packet header and a routing header in a first packet according to an embodiment of this application;
FIG. 5C is a diagram of formats of a packet header and a routing header in a first packet according to an embodiment of this application;
FIG. 5D is a diagram of formats of a packet header and a routing header in a first packet according to an embodiment of this application;
FIG. 6 is a diagram of a format of a second packet according to an embodiment of this application;
FIG. 7A is a diagram of a structure of a communication apparatus according to an embodiment of this application;
FIG. 7B is a diagram of a structure of a communication apparatus according to an embodiment of this application;
FIG. 7C is a diagram of a structure of a communication apparatus according to an embodiment of this application; and
FIG. 8 is a diagram of a structure of a communication device according to an embodiment of this application.

### DESCRIPTION OF EMBODIMENTS

It should be noted that, in this application, prefix words such as "first" and "second" are used only to distinguish between different described objects, and do not constitute any limitation on locations, a sequence, priorities, a quantity, content, or the like of the described objects. For example, if the described object is a "field", ordinal numbers before the "field" in a "first field" and a "second field" do not limit locations or a sequence of the "fields", and "first" and "second" do not limit whether "fields" modified by "first" and "second" are in a same message, and do not limit a sequence of the "first field" and the "second field". For another example, if the described object is a "level", ordinal numbers before the "level" in a "first level" and a "second level" do not limit priorities of the "levels". For another example, a quantity of described objects is not limited by prefixes, and may be one or more. A "first device" is used as an example. A quantity of "devices" may be one or more. In addition, objects modified by different prefixes may be the same or different. For example, if the described object is a "device", a "first device" and a "second device" may be a same device, devices of a same type, or devices of different types. For another example, if the described object is "information", "first information" and "second information" may be information of same content or information of different content. In conclusion, in embodiments of this application, the prefixes used to distinguish between the described objects do not constitute any limitation on the described objects. For descriptions of the described objects, refer to descriptions of the context in the claims or embodiments. The prefixes should not constitute any unnecessary limitation.

It should be noted that, in embodiments of this application, expressions such as "at least one of a1, a2, ..., and an" are used, including a case in which any one of a1, a2, ..., and an exists alone, and also including any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

The following describes technical solutions in embodiments in this application with reference to accompanying drawings.

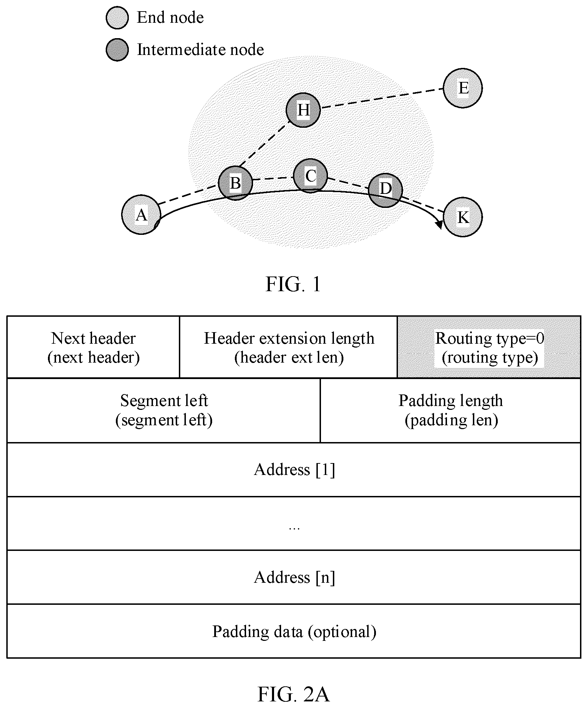

FIG. 1 is a diagram of an architecture of a communication system according to an embodiment of this application. The communication system is configured to forward a data packet in a network. The communication system includes at least one end node and at least one intermediate node, where the at least one intermediate node forms a backbone network, and each of the at least one end node accesses the network through one of the at least one intermediate node.

For example, the end node may also be referred to as a wireless end system (wireless end system, WES), and the intermediate node may be referred to as a wireless intermediate system (wireless intermediate system, WIS). In some possible embodiments, the intermediate node connected to the end node may also be referred to as an access point of the end node, or a WIS directly connected to the end node.

In FIG. 1, the at least one end node includes, for example, a node A, a node K, and a node E. The at least one intermediate node includes, for example, a node B, a node C, a node D, and a node H. The node A accesses the network through the node B, the node K accesses the network through the node D, and the node E accesses the network through the node H.

Through forwarding operations between a plurality of intermediate nodes, data exchange between the end node and the backbone network may be implemented, or data exchange between an end node and an end node may be implemented. For example, in FIG. 1, each intermediate node may be configured to forward a packet. For example, the end node A sends a data packet to the end node K. The data packet of the node A may be forwarded to the node K through the node B→the node C→the node D. An ordered node set including the node B, the node C, and the node D indicates a forwarding path from the node A to the node K. In this case, the end node A may be referred to as a source node corresponding to the data packet, and the end node K may be referred to as a destination node corresponding to the data packet.

The intermediate node is a network device having a routing and forwarding capability, for example, may be a wireless network device, or may be a router or a layer 3 switch (or referred to as a multilayer switch). The intermediate node may alternatively be a component in the router or a component in the layer 3 switch, and the component may be, for example, a board, a line card, or a chip.

The end node is an electronic device having a communication capability. The end node may be, for example, an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a part (for example, a chip or an integrated circuit) included in an independent device. The end node may alternatively be any possible intelligent terminal device (for example, a mobile phone), an intelligent transportation device (for example, a vehicle or an uncrewed aerial vehicle), an intelligent manufacturing device, a smart home device (for example, a large screen or a speaker), or the like.

For example, when the end node is a vehicle-mounted device, the end node may be a cockpit (cockpit domain) device or a module in the cockpit device, for example, one or more of modules such as a cockpit domain controller (cockpit domain controller, CDC), a camera, a screen, a microphone, a speaker, an electronic key, or a passive entry passive start system controller. In the vehicle, the end node may alternatively be a battery management system (battery management system, BMS), a battery control unit (battery control unit, BCU) in the BMS, a battery monitoring unit (battery monitoring unit, BMU) in the BMS, or a battery in a battery pack.

For example, when the end node is a handheld terminal, the end node may be a mobile phone (mobile phone), a wearable device, a tablet computer (pad), or a computer (like a notebook computer or a palmtop computer) having a data receiving and sending function.

The communication system shown in FIG. 1 may be used in a plurality of application scenarios, for example, the following application scenarios: a mobile internet (mobile internet, MI), industrial control (industrial control), self driving (self driving), transportation safety (transportation safety), an internet of things (internet of things, IoT), a smart city (smart city), or a smart home (smart home).

The communication system shown in FIG. 1 may be used in a plurality of types of networks, for example, used in one or more of the following types of networks: SparkLink (SparkLink), a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), or a vehicle-mounted short-range wireless communication network.

Herein, both a network address of the end node and a network address of the intermediate node each are a short address of a network layer, and a length of the address may be 2 bytes (that is, 16 bits), and may be used for addressing in a corresponding communication system. For example, in a SparkLink communication system, an address type of the network address of the end node and an address type of the network address of the intermediate node may be a SparkLink network address. It may be understood that the SparkLink network address is another address type different from an IP address.

It may be understood that the end node and the intermediate node each are a node, and the node is a name of the electronic device having the communication capability. In some application scenarios or some network types, a name of a device having a similar communication capability may not be referred to as a node, for example, may be referred to as a network device. This is not specifically limited herein.

It should be noted that FIG. 1 is merely an example of a diagram of an architecture, and a quantity of network elements included in the system shown in FIG. 1 is not limited. In addition to functional entities shown in FIG. 1, another functional entity may be included in FIG. 1 although it is not shown in FIG. 1. In addition, a method provided in embodiments of this application may be applied to the communication system shown in FIG. 1. Certainly, the method provided in embodiments of this application may alternatively be applied to another communication system. This is not limited in embodiments of this application.

Based on the diagram of the architecture shown in FIG. 1, an embodiment of this application provides a packet sending method. Through a packet header and a predefined routing header, packet forwarding on a data plane can be better supported in a scenario in which an end node in a network moves.

Herein, that the end node moves in the network means that an intermediate node accessed by the end node changes. For example, in FIG. 1, the node K is used as an example. The node K is an end node in the network, and an intermediate node currently accessed by the node K (it is assumed that the node K is at a location 1) is the node D. If the node K moves from the location 1 to a location 2, and an intermediate node accessed by the node K at the location 2 is the node H, it indicates that the node K moves. Correspondingly, if the node K moves from the location 1 to the location 2, and an intermediate node accessed by the node K at the location 2 is still the node D, it indicates that the node K does not move.

The following describes the routing header defined in this embodiment of this application.

In this embodiment of this application, in the scenario in which the end node moves, the packet header and the routing header are combined to use, and the routing header is used as a next header of the packet header. For example, when the source node sends a packet to the destination node, a destination address field in the packet header of the packet indicates a network address of a first intermediate node accessed by the destination node. In this case, the routing header carries a network address of the destination node, and the routing header may be used to indicate the first intermediate node to forward the packet to the destination node. In other words, in a packet forwarding process, the network address carried in the destination address field in the packet header of the packet may be updated based on the network address carried in the routing header.

In this embodiment of this application, the routing header includes a routing type field, and the routing type field indicates a type of the routing header. A value of the routing type field is related to whether the routing header includes a source location identifier field, where the source location identifier field is used by the destination node corresponding to the packet to reversely address the source node corresponding to the packet.

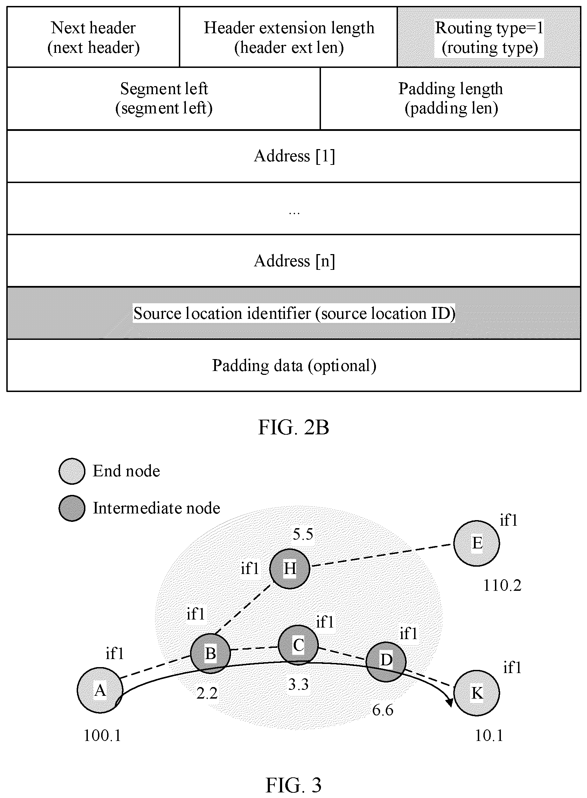

Embodiments of this application provide diagrams of two formats of a routing header. For details, refer to FIG. 2A and FIG. 2B below.

In FIG. 2A, when a value of a routing type (routing type) field is a first preset value (for example, "0"), the routing type field indicates that a type of the routing header is a first type. In this case, the routing header shown in FIG. 2A includes a plurality of the following fields:
Next header (next header): This field indicates a type of a next packet extension header of a routing header. It may be understood that, when there is no packet extension header following the routing header, the next header field may be by default.

Header extension length (header ext len): This field indicates an extension length of a routing header.

Routing type (routing type): This field indicates a type of a routing header, and a value of this field in FIG. 2A is 0.

Multiple addresses: The multiple addresses include n address fields shown in FIG. 2A, to be specific, an address [1], ..., and an address [n], where n is a positive integer greater than 1. Herein, addresses stored in the n address fields include at least a network address of a destination node.

Segment left (segment left): A value of this field may change. When the value of the segment left field changes, a target address field corresponding to a value of the current segment left field in the n address fields may be determined based on the segment left field, and a network address stored in the target address field is updated to a destination address field in a packet header.

Padding length (padding len): This field indicates a quantity of bytes padded in a routing header.

In some possible embodiments, in fields shown in FIG. 2A, the three fields: the next header, the header extension length, and the padding data each may be an optional field.

In some possible embodiments, the segment left field may also be an optional field. For example, when there is one address field carried in the routing header, the segment left field may be by default, or the value of the segment left field corresponds to a currently unique address field in the routing header. For another example, when there are a plurality of address fields carried in the routing header, a corresponding target address field may be determined from the plurality of address fields by changing the value of the segment left field.

In FIG. 2B, when a value of the routing type field is a second preset value (for example, "1"), the routing type field indicates that a type of a routing header is a second type. In this case, compared with the routing header shown in FIG. 2A, the routing header shown in FIG. 2B includes one more source location identifier (source location ID) field.

Specifically, when a source node is an end node in a network, the source location identifier field indicates a network address of a second intermediate node connected to the source node; or when a source node is an intermediate node in a network, the source location identifier field indicates a network address of the source node. For details of another remaining field in the routing header shown in FIG. 2B, refer to descriptions of a corresponding field in the routing header shown in FIG. 2A. For brevity of this specification, details are not described herein again.

It can be learned that a network location or an access location of the source node may be determined based on the source location identifier field. In this way, when the source node moves, a destination node may also quickly determine the network location or the access location of the source node based on the source location identifier field in a packet sent by the source node.

Herein, a network address indicated by each address field carried in the routing header shown in FIG. 2A or FIG. 2B is a short address of a network layer different from an IP address. A length of the address is generally 16 bits, namely, 2 bytes, and may be used for addressing in a corresponding communication system. For example, in the SparkLink communication system, a type of a network address of a node may be a SparkLink network address. In addition, for a network address used in embodiments of this application, network addresses carried in the routing header and the packet header each have a much smaller length than an IPv4 address with a length of 32 bits and an IPv6 address with a length of 128 bits. This greatly reduces overheads of the packet header and the routing header, and helps increase a proportion of data carried in a packet.

Compared with the diagram of the architecture shown in FIG. 1, FIG. 3 shows a network address and an out interface identifier of each node in a network. For example, a network address of the node A is 100.1, and an out interface identifier of the node A is if1; and a network address of the node B is 2.2, and an out interface identifier of the node B is if1. Network addresses and out interface identifiers of other remaining nodes in FIG. 3 may be learned of from FIG. 3, and are not listed one by one herein. It can be learned that one network address is configured on each node shown in FIG. 3. In some possible embodiments, a plurality of network addresses may be configured on a same node. This is not specifically limited herein.

It may be understood that, to implement packet forwarding, a node needs to depend on a forwarding table locally generated by the node. An embodiment of this application defines a forwarding table. The forwarding table includes a forwarding entry corresponding to at least one destination address. The forwarding entry corresponding to the destination address records a correspondence between the destination address (destination address), an out interface identifier (out interface ID) of the node, a next hop layer 2 identifier (next hop layer 2 identifier, next hop L2ID) of the node, a transport channel identifier (transport channel identifier, TCID) of the node, and a logical channel identifier (logical channel identifier, LCID) of the node. It may be understood that the node searches the forwarding table for the corresponding forwarding entry based on the destination address. For example, the TCID and the LCID are predefined in a SparkLink communication system, and are used for encapsulation and sending of a packet at a bottom layer (for example, a wireless basic service layer in a SparkLink network).

A forwarding table generated by the node A in FIG. 3 is used as an example to further describe a forwarding entry corresponding to a destination address in the forwarding table. The forwarding table generated by the node A in FIG. 3 may be represented as a correspondence table shown in Table 1. As shown in Table 1, three forwarding entries are stored in Table 1: a forwarding entry corresponding to a destination address 0.0, a forwarding entry corresponding to a destination address 2.2, and a forwarding entry corresponding to a destination address 100.1.

The forwarding entry 2.2-if1-2222.2222.2222-20-2 corresponding to the destination address 2.2 in Table 1 is used as an example. In the forwarding entry, if1 indicates an out interface of the node A, and 2222.2222.2222 indicates a next hop layer 2 identifier of the node A used when a packet needs to be forwarded to the destination address 2.2. It can be learned from FIG. 3 that 2222.2222.2222 is a layer 2 identifier of the node B, 20 indicates a transport channel identifier of the node A, and 2 indicates a logical channel identifier of the node A. When the node A finds, based on a network address indicated by a destination address field in a packet header, the forwarding entry corresponding to the destination address 2.2, the node A may perform bottom-layer encapsulation on a packet based on the TCID and the LCID in the forwarding entry, and send, based on the local out interface if1, the TCID, and the LCID, the packet to the node B whose layer 2 identifier is 2222.2222.2222.

The forwarding entry corresponding to the destination address 0.0 in Table 1 may be a forwarding entry corresponding to a default route that is locally generated by the node A as an end node by default. Specifically, after the node A in FIG. 3 accesses a network through the node B, the node A locally generates, by default based on a wireless adjacency protocol (wireless adjacency protocol, WAP), the forwarding entry corresponding to the default route. When the node A sends the packet, if no forwarding entry corresponding to a same network address is found in the forwarding table based on a network address indicated by a destination address field in the packet header of the packet, the node A sends the packet based on the forwarding entry corresponding to the destination address 0.0.

It should be noted that the forwarding table generated by the node A shown in Table 1 is merely an example, and a quantity of forwarding entries in the forwarding table generated by the node A shown in FIG. 3 is not limited in embodiments of this application.

**Table 1**

| Destination address (destination address) | Out interface identifier (out interface ID) | Next hop layer 2 identifier (next hop L2ID) | Transport channel identifier (TCID) | Logical channel identifier (LCID) |
|---|---|---|---|---|
| 0.0 | if1 | 2222.2222.2222 | 20 | 2 |
| 2.2 | if1 | 2222.2222.2222 | 20 | 2 |
| 100.1 | localhost | 0 | 0 | 0 |

It may be understood that Table 1 is merely used as an example to indicate a correspondence between a destination address, an out interface identifier of a node, a next hop layer 2 identifier of the node, a transport channel identifier of the node, and a logical channel identifier of the node. In actual application, text content and a storage manner of the correspondence may alternatively be in another form. This is not specifically limited herein.

In this embodiment of this application, a node in the network may generate a forwarding table in this embodiment of this application based on a local adjacency table and a local routing table. The adjacency table and the routing table are associated via a destination address and an out interface identifier. The next hop layer 2 identifier, the TCID, and the LCID in the forwarding table may be obtained from the adjacency table, and the destination address and the out interface identifier may be obtained from the routing table.

For example, the node A generates the forwarding table. After the node A accesses the network, the node A generates an adjacency table based on the WAP protocol, and generates a routing table based on a routing protocol (for example, the ad hoc on-demand distance vector routing AODV).

For example, the adjacency table includes at least one correspondence, where the correspondence in the adjacency table is specifically a correspondence between a network address of an adjacent node (that is, a next hop of the node A), a local out interface identifier, a layer 2 identifier of the adjacent node, a local TCID, an LCID, and a link quality level.

For example, the routing table includes at least one correspondence, and the correspondence in the routing table is specifically a correspondence between a destination address, an out interface identifier, a network address of a next hop, a routing protocol type, and a routing protocol priority.

It may be understood that, the network address of the adjacent node in the adjacency table is the network address of the next hop in the routing table, and the local out interface identifier in the adjacency table is the out interface identifier in the routing table. It indicates that the adjacency table and the routing table may be associated via the destination address and the out interface identifier in the forwarding tables.

Further, the forwarding entry corresponding to the destination address 2.2 in Table 1 is used as an example to describe a process of generating a forwarding entry: The node A searches the local routing table for the routing entry corresponding to the destination address 2.2, and obtains, from the routing entry corresponding to the destination address 2.2, the out interface identifier if1 corresponding to the destination address 2.2 and a network address 2.2 of the next hop, that is, the node A obtains the destination address (that is, 2.2) and the out interface ID (that is, if1) in the forwarding entry corresponding to the destination address 2.2 in Table 1; and the node A searches, based on the out interface identifier if1 (which is equivalent to the local interface identifier in the adjacency table) and the network address 2.2 of the next-hop (which is equivalent to the network address of the adjacent node in the adjacency table), the adjacency table for an adjacency entry corresponding to a combination of if1 and 2.2, and obtains the layer 2 identifier 2222.2222.2222 of the adjacent node, the transport channel identifier 20, and the logical channel identifier 2 from the adjacency entry, that is, the node A obtains the next hop L2ID (that is, 2222.2222.2222), the TCID (that is, 20), and the LCID (that is, 2) in the forwarding entry corresponding to the destination address 2.2 in Table 1. Therefore, the node A generates the forwarding entry corresponding to the destination address in Table 1: 2.2-if1-2222.2222.2222-20-2.

It should be noted that, for a process of generating a forwarding table on another node shown in FIG. 3, refer to the foregoing process of generating a forwarding table on the node A. For brevity of this specification, details are not described herein again.

The following describes a packet sending method based on the foregoing defined routing header and forwarding entry.

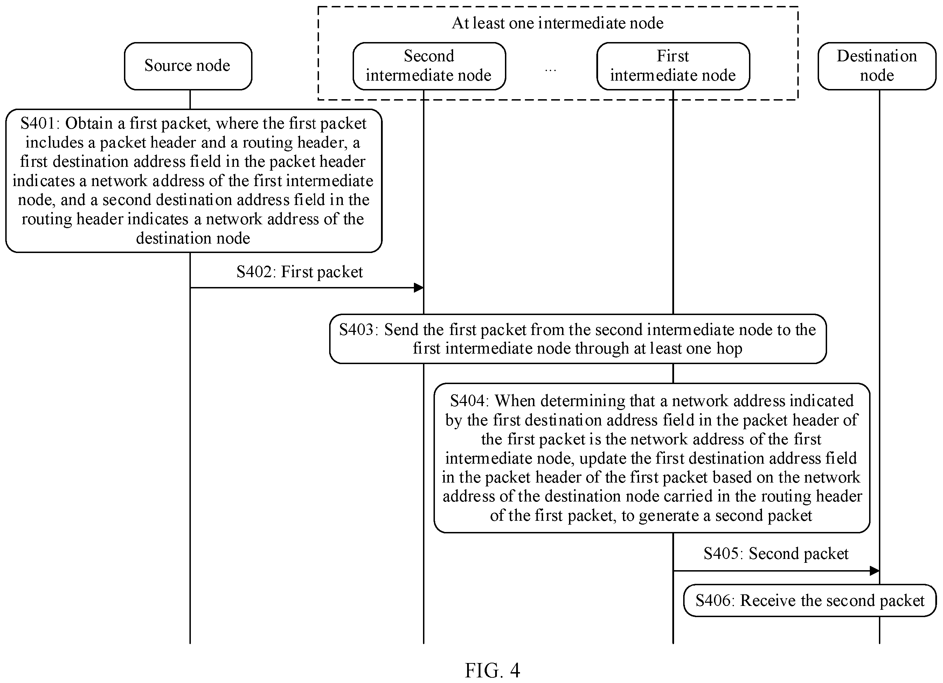

FIG. 4 is a schematic flowchart of a packet sending method according to an embodiment of this application.

The method may be applied to a communication system including a source node, at least one intermediate node, and a destination node. The source node is a start sending node corresponding to a packet, the destination node is a final receiving node corresponding to the packet, and the source node may communicate with the destination node through the at least one intermediate node. For example, the at least one intermediate node includes a first intermediate node and a second intermediate node, where the first intermediate node is an intermediate node that establishes a communication connection to the destination node (which may also be referred to as that the destination node accesses a network through the first intermediate node), and the second intermediate node is an intermediate node that establishes a communication connection to the source node (which may also be referred to as that the source node accesses the network through the second intermediate node). For example, the packet sent by the second intermediate node may arrive at the first intermediate node through at least one hop. In some possible embodiments, the second intermediate node and the first intermediate node may alternatively be a same intermediate node, or the second intermediate node may be directly connected to the first intermediate node, or there may be at least one intermediate node between the second intermediate node and the first intermediate node. This is not specifically limited herein.

For example, a node in the communication system may use a proactive routing protocol, or may select a corresponding routing protocol based on a feature of the node, for example, an Ad hoc On-Demand Distance Vector Routing AODV protocol or an Optimized Link State Routing OLSR Protocol. This is not specifically limited herein.

The method includes but is not limited to the following steps.

S401: The source node obtains a first packet, where the first packet includes a packet header and a routing header, a first destination address field in the packet header indicates a network address of the first intermediate node, and a second destination address field in the routing header indicates a network address of the destination node.

The destination node is an end node that accesses the first intermediate node.

In this embodiment of this application, that the source node obtains the first packet is specifically that the source node generates the first packet.

The network address of the first intermediate node may be obtained by the source node from an address resolver node, and the address resolver node stores at least a mapping relationship between a network address of an end node in a network and a network address of an intermediate node connected to the end node.

Specifically, before generating the first packet, the source node sends address request information to the address resolver node, where the address request information carries the network address of the destination node; and after receiving the address request information, the address resolver node sends address query information to the source node in response to the address request information, where the address query information includes a first mapping relationship between the network address of the destination node and the network address of the first intermediate node, and the first mapping relationship indicates that the destination node is connected to the first intermediate node, so that the source node obtains the network address of the first intermediate node from the address query information.

In this embodiment of this application, the routing header indicates the first intermediate node to forward the packet to the destination node.

In some possible embodiments, the routing header further includes a routing type field, and the routing type field indicates a type of the routing header. A value of the routing type field is related to whether the routing header includes a source location identifier field, where the source location identifier field is used by the destination node to reversely address the source node.

For example, when the source node sets the value of the routing type field in the routing header to a first preset value (for example, "0"), the routing header of the first packet does not include the source location identifier field; or when the source node sets the value of the routing type field in the routing header to a second preset value (for example, "1"), the routing header of the first packet includes the source location identifier field.

Herein, when the source node is an end node in the network, the source location identifier field indicates a network address of the second intermediate node; or when the source node is an intermediate node in the network, the source location identifier field indicates a network address of the source node.

In some possible embodiments, the routing header further includes a third destination address field, and the third destination address field indicates the network address of the first intermediate node. Further, the routing header further includes a segment left field, and when a value of the segment left field is a first value, and the first value corresponds to the third destination address field, the routing header indicates the first intermediate node to change the value of the segment left field from the first value to a second value, and update a network address indicated by the first destination address field to the network address of the destination node based on the second destination address field corresponding to the second value.

FIG. 3 is used as an example. If the source node is the node A, and the destination node is the node K, the first intermediate node is the node D, and the second intermediate node is the node B. The node A obtains a network address 6.6 of the node D from the address resolver node (for example, the node H). In this case, the first packet generated by the node A may be, for example, in the following plurality of formats.

### First format:

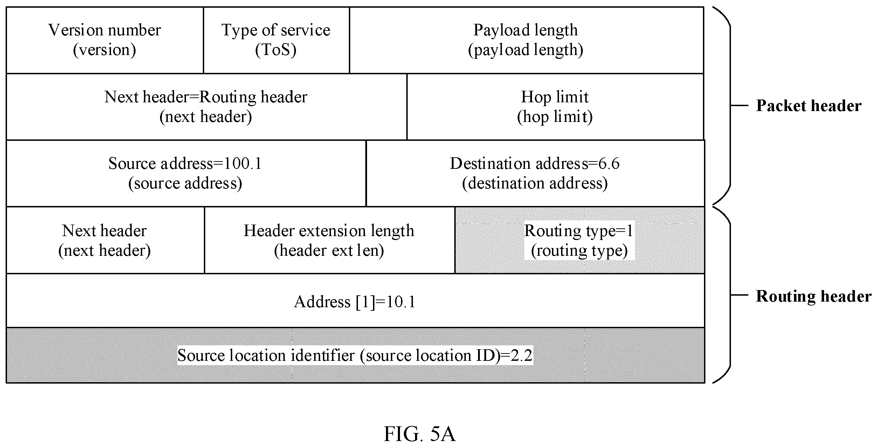

Refer to a diagram of formats of a packet header and a routing header in the first packet shown in FIG. 5A.

First, fields in the packet header shown in FIG. 5A are described.

Version number (version): The version number indicates a version number of a network communication protocol.

Type of service (type of service, ToS): The type of service field indicates a type of service, and is related to quality of service QoS.

Payload length field: The payload length field indicates a length of a payload of a packet.

Next header (next header): The next header indicates a type of a next packet extension header of a packet header. In FIG. 5A, this field indicates a routing header.

Hop limit (hop limit): The hop limit indicates a maximum hop count of a packet.

Source address (source address) field: The source address field indicates a source address of a packet. In FIG. 5A, this field indicates a network address 100.1 of the node A.

Destination address (destination address): The destination address field indicates a destination address of a packet. In FIG. 5A, this field indicates a network address 6.6 of the node D accessed by the node K.

It should be noted that the packet header shown in FIG. 5A is merely an example. In some possible embodiments, a quantity of fields in the packet header may be greater than a quantity of fields in the packet header shown in FIG. 5A, or less than the quantity of fields in the packet header shown in FIG. 5A. This is not specifically limited herein.

In the routing header shown in FIG. 5A, the routing header includes five fields: a next header, a header extension length, a routing type, an address [1], and a source location identifier. A value of the routing type field is "1", the source location identifier field indicates a network address 2.2 (that is, a network address of the node B), and the address [1] indicates a network address 10.1 (a network address of the node K). It can be learned that a quantity of addresses in the routing header is 1. For descriptions of the two fields: the next header and the header extension length, refer to descriptions of corresponding content in FIG. 2A.

### Second format:

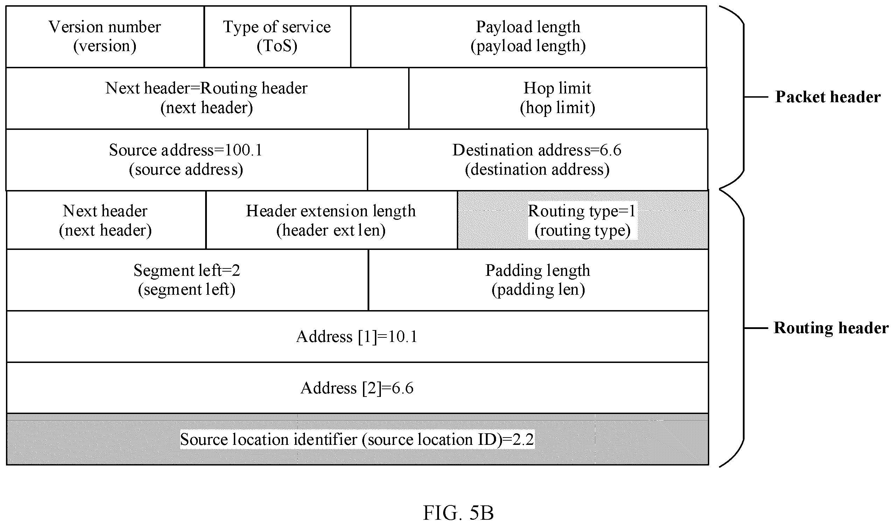

Refer to a diagram of formats of a packet header and a routing header in the first packet shown in FIG. 5B. In FIG. 5B, the first packet includes the packet header and the routing header. For details about the packet header, refer to the foregoing descriptions of the packet header in FIG. 5A. Herein, the routing header shown in FIG. 5B is described in detail.

Compared with the routing header shown in FIG. 5A, the routing header shown in FIG. 5B carries a segment left field and two address fields: an address [1] and an address [2]. The address [1] indicates a network address 10.1 (a network address of the node K), the address [2] indicates a network address 6.6 (that is, a network address of the node D), a current value of the segment left field is 2, and the segment left field currently corresponds to the address [2]. In this case, a subsequent value of the segment left field may change in a descending manner. For descriptions of three fields: a next header, a header extension length, and a padding length in the routing header shown in FIG. 5B, refer to descriptions of corresponding content in FIG. 2A. Details are not described herein again.

### Third format:

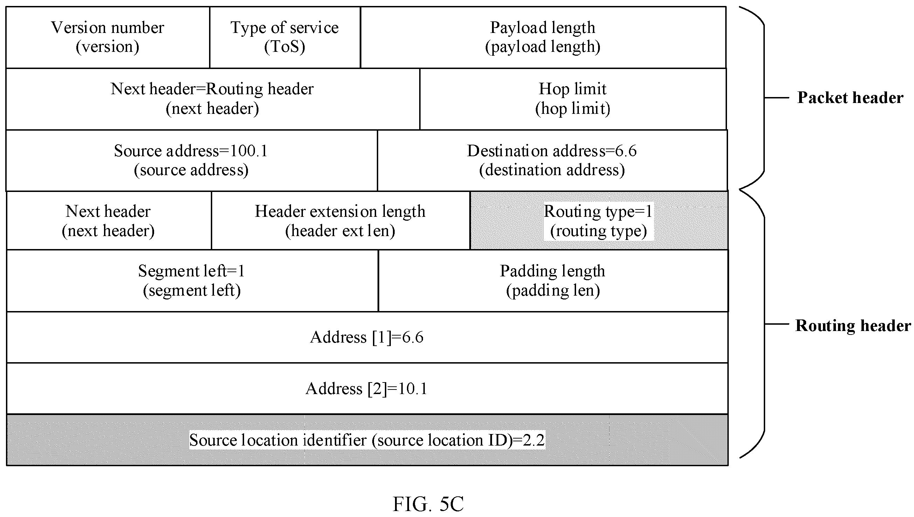

Refer to a diagram of formats of a packet header and a routing header in the first packet shown in FIG. 5C. In FIG. 5C, the first packet includes the packet header and the routing header. For details about the packet header, refer to the foregoing descriptions of the packet header in FIG. 5A. Herein, the routing header shown in FIG. 5C is described in detail.

In comparison with the routing header shown in FIG. 5B, in the routing header in FIG. 5C, a value of a segment left field and a correspondence between a segment left field and an address field in FIG. 5C are different. The routing header shown in FIG. 5C also includes two address fields: an address [1] and an address [2]. The address [2] indicates a network address 10.1 (a network address of the node K), the address [1] indicates a network address 6.6 (that is, a network address of the node D), a current value of the segment left field is 1, and the segment left field currently corresponds to the address [1]. In this case, a subsequent value of the segment left field may change in an ascending manner. For descriptions of three fields: a next header, a header extension length, and a padding length in the routing header shown in FIG. 5C, refer to descriptions of corresponding content in FIG. 2A. Details are not described herein again.

### Fourth format:

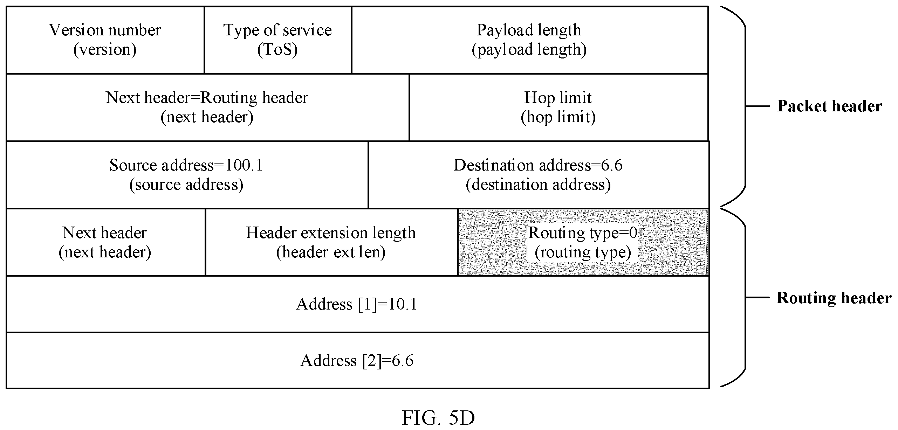

Refer to a diagram of formats of a packet header and a routing header in the first packet shown in FIG. 5D. In FIG. 5D, the first packet includes the packet header and the routing header. For details about the packet header, refer to the foregoing descriptions of the packet header in FIG. 5A. Herein, the routing header shown in FIG. 5D is described in detail.

In comparison with the routing header shown in FIG. 5A, in the routing header shown in FIG. 5D, a value of a routing type field is "0", the routing header shown in FIG. 5D does not include a source location identifier field, and a quantity of address fields carried in the routing header is 2, that is, an address [2] is added, and the address [2] indicates a network address 6.6 (that is, a network address of the node D). For descriptions of two fields: a next header and a header extension length in the routing header shown in FIG. 5D, refer to descriptions of corresponding content in FIG. 2A. Details are not described herein again.

It should be noted that any one of FIG. 5A, FIG. 5B, FIG. 5C, or FIG. 5D is an example of the packet header and the routing header in the first packet, and does not limit the packet header and the routing header in the first packet. In some possible embodiments, a quantity of fields in the first packet may be less than a quantity of fields shown in FIG. 5A. For example, one or more of the padding length field, the next header field, and the header extension length field in the routing header may be by default, and one or more of a flow label field, the payload length field, or the hop limit field in the packet header may be by default. This is not specifically limited herein. In some possible embodiments, a quantity of fields in the first packet may be greater than a quantity of fields shown in FIG. 5A. For example, a padding data field may be further added to the routing header shown in FIG. 5A.

S402: The source node sends the first packet to the second intermediate node.

In this embodiment of this application, after obtaining the network address of the first intermediate node from the address resolver node, the source node searches, based on the network address of the first intermediate node, a local forwarding table for a forwarding entry corresponding to the network address of the first intermediate node, and determines, based on the forwarding entry corresponding to the network address of the first intermediate node, that a next hop is the second intermediate node, to send the first packet to the second intermediate node. For a specific process of generating the forwarding table, refer to the foregoing related descriptions of the forwarding table. For brevity of this specification, details are not described herein again.

For example, with reference to FIG. 3 and Table 1, it is assumed that the node A obtains the network address 6.6 of the intermediate node, namely, the node D, connected to the node K. The node A finds, based on the network address 6.6 of the node D, a forwarding entry corresponding to a destination address 0.0 in the forwarding table shown in Table 1, and indicates sending of the first packet based on the forwarding entry corresponding to the destination address 0.0, that is, it is determined, based on a next hop layer 2 identifier in the forwarding entry corresponding to the destination address 0.0, that a next hop (that is, the second intermediate node) of the node A is the node B, so that the node A sends the first packet to the node B.

In some possible embodiments, when the source node is the end node in the network, the source node may move, and movement of the source node causes a change of the second intermediate node connected to the source node. For example, in FIG. 3, it is assumed that the node A moves but the node K does not move, and a node accessed by the node A changes from the node B to the node H. In this case, the node H may locally sense access of the node A, the node B may locally sense disconnection of the node A, the node A may sense access of the node H, the forwarding entry corresponding to the local destination address 0. of the node Ais correspondingly updated, and the node A may determine, from an updated forwarding entry based on the network address 6.6 of the node D, that the second intermediate node is the node H.

In some possible embodiments, when the destination node is the end node in the network, the destination node may also move, and movement of the destination node causes a change of the first intermediate node connected to the destination node. For example, in FIG. 3, it is assumed that the node K moves, and a node accessed by the node K changes from the node D to the node C. Correspondingly, a mapping relationship between the network address of the node K and a network address of the node C is updated to the node H, and the node H sends the mapping relationship between the network address of the node K and the network address of the node C to the node A, so that the node A determines that the first intermediate node currently connected to the node K is the node C. It may be understood that, after the node K accesses the node C due to movement, the node C may locally sense access of the node K, and the node D may locally sense disconnection of the node K.

In this way, based on the packet header and the routing header, routing and addressing in a scenario in which an end node in a network moves can be implemented. It can be learned that, when the end node moves, only an intermediate node directly connected to the end node calculates a route of the end node, but a topology change caused by movement does not affect a backbone network of the network, that is, a backbone node device does not sense the moving end node.

S403: Send the first packet from the second intermediate node to the first intermediate node through the at least one hop.

In this embodiment of this application, the second intermediate node receives the first packet from the source node, and when the second intermediate node determines that a network address of the second intermediate node is not the network address indicated by the first destination address field in the packet header of the first packet, that is, when the second intermediate node determines that the network address of the second intermediate node is not the network address of the first intermediate node, the second intermediate node forwards the first packet.

Herein, in a process of forwarding the first packet from the second intermediate node to the first intermediate node, the source address field and the destination address field in the packet header of the first packet remain unchanged. Forwarding of the first packet on the intermediate node is performed under guidance of a local forwarding table for the intermediate node. For a specific process of generating the local forwarding table for the intermediate node, refer to related descriptions of the forwarding table in the foregoing embodiments.

In this embodiment of this application, the second intermediate node may be directly connected to the first intermediate node, or the second intermediate node is connected to the first intermediate node through the at least one intermediate node. This is not specifically limited herein.

For example, in FIG. 3, the node B receives the first packet sent by the node A, and determines that the network address indicated by the destination address field in the packet header of the first packet is the network address of the node D. The node B obtains, from a local forwarding table based on the network address of the node D, a forwarding entry corresponding to the network address of the node D, and determines, based on the forwarding entry corresponding to the network address of the node D, that a next hop of the node B is the node C, so that the node B forwards the first packet to the node C. Correspondingly, the node C obtains, from a local forwarding table based on the network address that is of the node D and that is indicated by the destination address field in the packet header of the first packet, a forwarding entry corresponding to the network address of the node D, and determines, based on the forwarding entry corresponding to the network address of the node D, that a next hop of the node C is the node D, so that the node C forwards the first packet to the node D.

S404: When determining that the network address indicated by the first destination address field in the packet header of the first packet is the network address of the first intermediate node, the first intermediate node updates the first destination address field in the packet header of the first packet based on the network address of the destination node carried in the routing header of the first packet, to generate a second packet.

The second packet is the first packet whose first destination address field is updated.

Herein, based on a different format of the routing header in the first packet, the network address indicated by the destination address field in the packet header may be updated in the following several manners.

### First manner:

Specifically, the second destination address field in the routing header indicates the network address of the destination node. When the first intermediate node determines that the first destination address field in the packet header of the first packet indicates the network address of the first intermediate node, the first intermediate node obtains the network address of the destination node from the second destination address field in the routing header, and updates, from the network address of the first intermediate node to the network address of the destination node, the network address indicated by the first destination address field in the packet header of the first packet. In this way, the second packet is generated.

For example, with reference to FIG. 3 and FIG. 5A, the first packet received by the node D in FIG. 3 is shown in FIG. 5A. The address field carried in the routing header of the first packet shown in FIG. 5A includes only the address [1]. The address [1] indicates the network address 10.1 of the destination node K. When the node D determines that the network address 6.6 indicated by the destination address field in the packet header of the first packet shown in FIG. 5A is the network address of the node D, the node D changes, from 6.6 to 10.1 based on the address [1] in the routing header, the network address indicated by the destination address field in the packet header in FIG. 5A.

### Second manner:

Specifically, the routing header further includes the third destination address field and the segment left field, where the third destination address field indicates the network address of the first intermediate node, the value of the segment left field is the first value, and the first value corresponds to the third destination address field. When the first intermediate node determines that the first destination address field in the packet header of the first packet indicates the network address of the first intermediate node, the first intermediate node processes the routing header, that is, changes the value of the segment left field from the first value to the second value, determines that the second value corresponds to the second destination address field, and then updates, from the network address of the first intermediate node to the network address of the destination node based on the second destination address field, the network address indicated by the first destination address field in the packet header of the first packet. In this way, the second packet is generated.

In an implementation, the first intermediate node may perform descending processing on the value of the segment left field in the routing header.

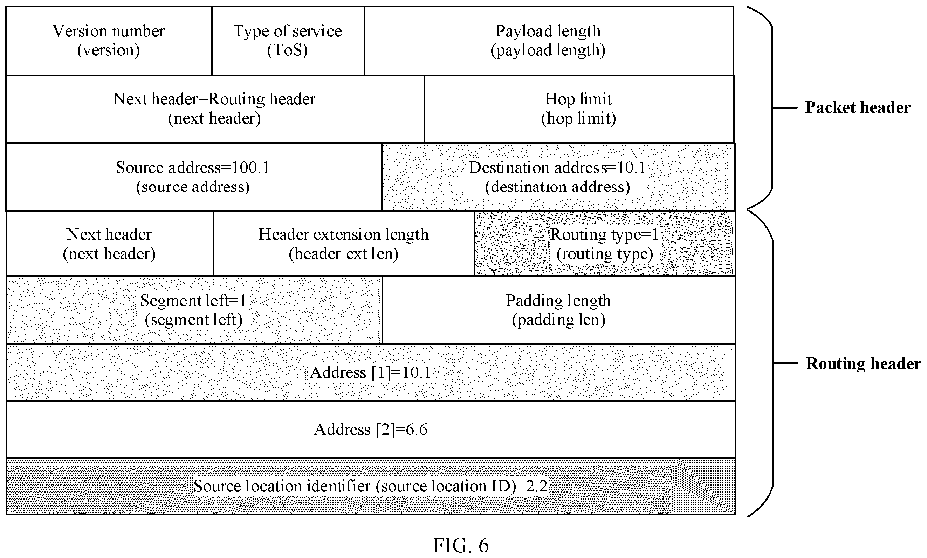

For example, with reference to FIG. 3 and FIG. 5B, the first packet received by the node D in FIG. 3 is shown in FIG. 5B. The routing header of the first packet shown in FIG. 5B includes the address [1], the address [2], and the segment left field. The address [1] indicates the network address 10.1 of the destination node K, the address [2] indicates the network address 6.6 of the first intermediate node D, and the value of the segment left field is 2, that is, the segment left field currently corresponds to the address [2]. When the node D determines that the network address 6.6 indicated by the destination address field in the packet header of the first packet shown in FIG. 5B is the network address of the node D, the node D subtracts 1 from the value of the segment left field in the routing header, so that the segment left field corresponds to the address [1], and an obtained value of the segment left field is 1. Then, the node D changes, based on the address [1] in the routing header, the network address indicated by the destination address field in the packet header in FIG. 5B from 6.6 to 10.1. In this way, the second packet is obtained, and the second packet is shown in FIG. 6. In comparison with the packet header and the routing header in the first packet shown in FIG. 5B, it can be learned that after processing by the node D, the value of the segment left field in the routing header in FIG. 6 is changed from "2" in FIG. 5B to "1", and the network address indicated by the destination address field in the packet header shown in FIG. 6 is changed from "6.6" in FIG. 5B to "10.1". For other remaining fields in FIG. 6, refer to descriptions of corresponding fields in FIG. 5B. Details are not described herein again.

In an implementation, the first intermediate node may perform ascending processing on the value of the segment left field in the routing header.

For example, with reference to FIG. 3 and FIG. 5C, the first packet received by the node D in FIG. 3 is shown in FIG. 5C. The routing header of the first packet shown in FIG. 5C includes the address [1], the address [2], and the segment left field. The address [1] indicates the network address 6.6 of the first intermediate node D, the address [2] indicates the network address 10.1 of the destination node K, and the value of the segment left field is 1, that is, the segment left field currently corresponds to the address [1]. When the node D determines that the network address 6.6 indicated by the destination address field in the packet header of the first packet shown in FIG. 5C is the network address of the node D, the node D adds 1 to the value of the segment left field in the routing header, so that the segment left field corresponds to the address [2], and an obtained value of the segment left field is 2. Then, the node D changes, from 6.6 to 10.1 based on the address [2] in the routing header, the network address indicated by the destination address field in the packet header in FIG. 5C.

### Third manner:

Specifically, the routing header further includes the third destination address field, but does not include the segment left field, that is, the routing header carries two address fields: the second destination address field indicating the network address of the destination node and the third destination address field indicating the network address of the first intermediate node. In this case, when the first intermediate node determines that the first destination address field in the packet header of the first packet indicates the network address of the first intermediate node, the first intermediate node updates, to the network address of the destination node indicated by the second destination address field, based on an address field (that is, the second destination address field) that is in the routing header and that does not indicate the network address of the first intermediate node, the network address indicated by the first destination address field in the packet header of the first packet.

For example, with reference to FIG. 3 and FIG. 5D, the first packet received by the node D in FIG. 3 is shown in FIG. 5D. The routing header of the first packet shown in FIG. 5D includes the address [1] and the address [2]. The address [1] indicates the network address 10.1 of the destination node K, and the address [2] indicates the network address 6.6 of the first intermediate node D. When the node D determines that the network address 6.6 indicated by the destination address field in the packet header of the first packet shown in FIG. 5D is the network address of the node D, the node D further determines that the network address 10.1 indicated by the address [1] in the routing header is different from the network address of the node D. Therefore, the node D changes, from 6.6 to 10.1 based on the address [1] in the routing header, the network address indicated by the destination address field in the packet header of the first packet.

S405: The first intermediate node sends the second packet to the destination node.

Specifically, the first intermediate node searches, based on the network address of the destination node indicated by the destination address field in the packet header of the second packet, the local forwarding table for the forwarding entry corresponding to the network address of the destination node, determines, based on the forwarding entry corresponding to the network address of the destination node, that a next hop is the destination node, and sends the second packet to the destination node.

S406: The destination node receives the second packet.

Specifically, the destination node determines, based on a network address indicated by a destination address field in a packet header of the second packet, that the packet is the packet of the destination node, and the destination node may parse the second packet, or send the second packet to an upper-layer application of the destination node for processing.

In some possible embodiments, after receiving the second packet, the destination node may further reply to the source node. Before the destination node replies to the source node, the destination node first needs to obtain the network address of the second intermediate node connected to the source node.

In an implementation, when a routing header of the second packet includes a source location identifier field, the destination node may obtain the network address of the second intermediate node from the source location identifier field, and send a third packet based on the network address of the second intermediate node, so that the second intermediate node forwards the third packet to the source node, where the third packet is a response to the first packet.

In another implementation, when a routing header of the second packet does not include a source location identifier field, the destination node may obtain the network address of the second intermediate node from the address resolver node, and send a third packet based on the network address of the second intermediate node, so that the second intermediate node forwards the third packet to the source node, where the third packet is a response to the first packet.

FIG. 3 is used as an example. If the source node is the node A, and the destination node is the node K, the first intermediate node is the node D, the second intermediate node is the node B, and the address resolver node is the node H. After the node K receives the second packet sent by the node D, the node K sends the third packet. A source address field in a packet header of the third packet indicates the network address of the node K, a destination address field in the packet header indicates the network address of the node B, a next header field in the packet header indicates a routing header, and the routing header carries the network address of the node A. It may be understood that the network address of the node B carried in the third packet is obtained by the node K from the source location identifier field in the routing header of the second packet (when the routing header includes the source location identifier field), or is obtained from the address resolver node by the node K.

It can be learned that, in this embodiment of this application, based on the network address that is of the intermediate node accessed by the destination node and that is carried in the packet header of the packet, and the network address that is of the destination node and that is carried in the next extension header (that is, the routing header) of the packet header, routing and addressing in a scenario in which the end node in the network moves can be better supported. When the destination node moves, only the intermediate node directly connected to the destination node senses a topology change caused by movement of the destination node, instead of that the entire network senses the topology change caused by movement of the end node in the conventional routing. Therefore, the packet header carries the network address of the intermediate node accessed by the destination node. This can effectively reduce a quantity of intermediate nodes that need to sense the topology change in the network.

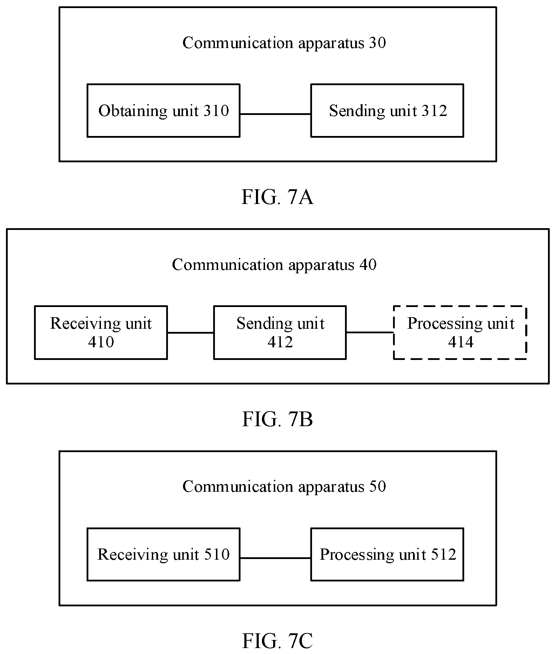

FIG. 7A is a diagram of a structure of a communication apparatus according to an embodiment of this application. The communication apparatus 30 includes an obtaining unit 310 and a sending unit 312. The communication apparatus 30 may be implemented by hardware, software, or a combination of software and hardware.

The obtaining unit 310 is configured to obtain a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and the sending unit 312 is configured to send the first packet.

The communication apparatus 30 may be configured to implement the method on the source node side described in the embodiment in FIG. 4. In the embodiment in FIG. 4, the obtaining unit 310 may be configured to perform S401, and the sending unit 312 may be configured to perform S402.

FIG. 7B is a diagram of a structure of a communication apparatus according to an embodiment of this application. The communication apparatus 40 includes a receiving unit 410 and a sending unit 412. In some possible embodiments, the communication apparatus 40 may further include a processing unit 414. The communication apparatus 40 may be implemented by hardware, software, or a combination of software and hardware. The communication apparatus 40 may be a first node, or the communication apparatus 40 is included in the first node.

The receiving unit 410 is configured to receive a first packet, where the first packet includes a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and the sending unit 412 is configured to: when a network address of the first node is not the network address of the first intermediate node, send the first packet; or the processing unit 414 is configured to: when a network address of the first node is the network address of the first intermediate node, update a network address indicated by the first destination address field from the network address of the first intermediate node to the network address of the destination node based on the second destination address field, to generate a second packet, where the sending unit 412 is configured to send the second packet.

The communication apparatus 40 may be configured to implement the method on the first intermediate node side, the second intermediate node side, or any intermediate node side described in the embodiment in FIG. 4.

For example, for the method on the second intermediate node side shown in the embodiment in FIG. 4, the receiving unit 410 may be configured to perform S402, and the sending unit 412 may be configured to perform S403.

For example, for the method on the first intermediate node side shown in the embodiment in FIG. 4, the receiving unit 410 may be configured to perform S403, the processing unit 414 may be configured to perform S404, and the sending unit 412 may be configured to perform S405.

FIG. 7C is a diagram of a structure of a communication apparatus according to an embodiment of this application. The communication apparatus 50 includes a receiving unit 510 and a processing unit 512. The communication apparatus 50 may be implemented by hardware, software, or a combination of software and hardware.

The receiving unit 510 is configured to receive a first packet, where the first packet includes a packet header and a routing header, a first destination address field in the packet header indicates a network address of a destination node, a second destination address field in the routing header indicates the network address of the destination node, a network address indicated by the first destination address field is updated from a network address of a first intermediate node to the network address of the destination node, and the first intermediate node is an intermediate node that establishes a communication connection to the destination node; and the processing unit is configured to parse the first packet.

The communication apparatus 50 may be configured to implement the method on the destination node side described in the embodiment in FIG. 4. In the embodiment in FIG. 4, the receiving unit 510 and the processing unit 512 may be configured to perform S406.

Optionally, the communication apparatus shown in FIG. 7A, FIG. 7B, or FIG. 7C may be an independent device, for example, a node, or may be a component in an independent device (for example, a node), for example, a chip or an integrated circuit.

It should be understood that division of the units in the embodiment shown in FIG. 7A, FIG. 7B, or FIG. 7C is merely logical function division. During an actual implementation, all or some of the units may be integrated into one physical entity, or may be physically separated. In addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, the units in the apparatus may be implemented in a form of hardware circuit, and functions of some or all units may be implemented through design of the hardware circuit. The hardware circuit may be understood as one or more processors. For example, in an implementation, the hardware circuit is an application-specific integrated circuit (application-specific integrated circuit, ASIC), and the functions of some or all of the units are implemented through design of a logical relationship between elements in the circuit. For another example, in another implementation, the hardware circuit may be implemented by a programmable logic device (programmable logic device, PLD), for example, a field programmable gate array (field programmable gate array, FPGA), the field programmable gate array may include a large quantity of logic gate circuits, and a connection relationship between the logic gate circuits is configured based on a configuration file, to implement the functions of some or all of the units. All the units of the apparatus may be implemented in a form of software invoked by the processor, or may be implemented in a form of hardware circuit, or some of the units are implemented in a form of software invoked by the processor, and remaining units are implemented in a form of hardware circuit.

In this embodiment of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In a reconfigurable hardware circuit, a process in which the processor loads a configuration document to implement hardware circuit configuration may be understood as a process in which the processor loads instructions to implement functions of some or all of the units. In addition, the hardware circuit may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that the units in the apparatus may be configured as one or more processors (or processing circuits) that implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of system-on-a-chip (system-on-a-chip, SOC). The SOC may include at least one processor, configured to implement any one of the foregoing methods or implement functions of the units in the apparatus. Types of the at least one processor may be different, for example, including a CPU and an FPGA, a CPU and an NPU.

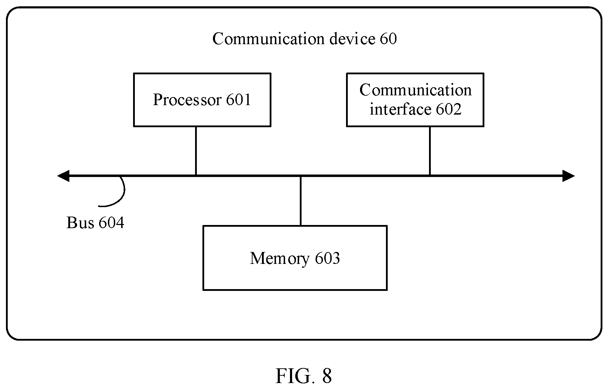

FIG. 8 is a diagram of a structure of a communication device according to an embodiment of this application. As shown in FIG. 8, a communication device 60 includes a processor 601, a communication interface 602, a memory 603, and a bus 604. The processor 601, the memory 603, and the communication interface 602 communicate with each other through the bus 604.

It should be understood that quantities of processors and memories in the communication device 60 are not limited in this application.

In an implementation, the communication device 60 may be a network device having a routing and forwarding capability, for example, may be a wireless network device, or may be a router, a layer 3 switch (or referred to as a multilayer switch), or may be a component that can implement the foregoing method and that is used in the network device, and the component may be, for example, an integrated circuit, a line card, or a chip.

In another implementation, the communication device 60 may be an electronic device having a communication capability, for example, may be an independent device like a handheld terminal, a vehicle, a vehicle-mounted device, a network side device, user equipment, an access terminal, a subscriber unit, a subscriber station, a mobile station, a mobile console, a remote station, a remote terminal, a wireless communication device, a user agent, or a user apparatus; or may be a component (for example, a chip or an integrated circuit) included in the independent device, or may be any possible intelligent terminal device (like a mobile phone), intelligent transportation device (like a vehicle or an uncrewed aerial vehicle), intelligent manufacturing device, smart home device (like a large screen or a speaker), or the like; or may be a component that can implement the foregoing method and that is used in the foregoing electronic device, and the component may be, for example, an integrated circuit, a line card, or a chip. In this case, for details of the communication device 60, refer to corresponding descriptions of the end node in the embodiment in FIG. 1, and details are not described herein again.

The bus 604 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 8, but this does not mean that there is only one bus or only one type of bus. The bus 604 may include a path for transferring information between various components (for example, the memory 603, the processor 601, and the communication interface 602) of the communication device 60.

For details of the processor 601, refer to related descriptions of the processor in the foregoing embodiments. Details are not described herein again.

The memory 603 is configured to provide storage space, and the storage space may store data such as an operating system and a computer program. The memory 603 may be one or a combination of a random access memory (random access memory, RAM), an erasable programmable read only memory (erasable programmable read only memory, EPROM), a read-only memory (read-only memory, ROM), a compact disc read-only memory (compact disc read-only memory, CD-ROM), or the like. The memory 603 may exist independently, or may be integrated into the processor 601.

The communication interface 602 may be configured to provide an information input or output for the processor 601. Alternatively, the communication interface 602 may be configured to receive data sent from the outside and/or send data to the outside. The communication interface 602 may be a wireless link interface, for example, an air interface, a cellular network interface, or a wireless local area network interface, or may be a wired link interface including an Ethernet cable or the like, or may include a transmitter (like a radio frequency transmitter or an antenna) coupled to an interface, or a receiver. For example, when the communication interface 602 is a wireless link interface, the communication interface 602 may be configured to receive and send information based on one or more other types of wireless communication (for example, a protocol), where the wireless communication is, for example, Bluetooth, an IEEE 802.11 communication protocol, a cellular technology, worldwide interoperability for microwave access (worldwide interoperability for microwave access, WiMAX) or long term evolution (Long Term Evolution, LTE), a ZigBee protocol, dedicated short range communications (dedicated short range communications, DSRC), and radio frequency identification (radio frequency identification, RFID) communication.

The processor 601 in the communication device 60 is configured to read the computer program stored in the memory 603, to perform the foregoing method, for example, the method described in FIG. 4.

In a possible design, the communication device 60 may be one or more modules in an execution body (a source node) that performs the method shown in FIG. 4, and the processor 601 may be configured to read one or more computer programs stored in the memory, to perform the following operations:
obtaining a first packet by using the obtaining unit 310, where the first packet includes a packet header and a routing header, a first destination address field in the packet header indicates a network address of a first intermediate node, a second destination address field in the routing header indicates a network address of a destination node, and the destination node accesses a network through the first intermediate node; and
sending the first packet by using the sending unit 312.

In a possible design, the communication device 60 may be one or more modules in an execution body (an intermediate node) that performs the method shown in FIG. 4, and the processor 601 may be configured to read one or more computer programs stored in the memory, to perform the following operations:
receiving a first packet by using the receiving unit 410, where the first packet includes a packet header and a routing header, a first destination address field in the packet header indicates a network address of a first intermediate node, a second destination address field in the routing header indicates a network address of a destination node, and the destination node accesses a network through the first intermediate node; and
when a network address of a first node is not the network address of the first intermediate node, sending the first packet by using the sending unit 412; or when a network address of a first node is the network address of the first intermediate node, updating a network address indicated by the first destination address field from the network address of the first intermediate node to the network address of the destination node based on the second destination address field, to generate the second packet; and sending the second packet.

In a possible design, the communication device 60 may be one or more modules in an execution body (a destination node) that performs the method shown in FIG. 4, and the processor 601 may be configured to read one or more computer programs stored in the memory, to perform the following operations:
receiving a first packet by using the receiving unit 510, where the first packet includes a packet header and a routing header, a first destination address field in the packet header indicates a network address of a destination node, a second destination address field in the routing header indicates the network address of the destination node, a network address indicated by the first destination address field is updated from a network address of a first intermediate node to the network address of the destination node, and the destination node accesses a network through the first intermediate node.

In the foregoing embodiments in this specification, the descriptions of each embodiment have respective focuses. For a part that is not described in detail in an embodiment, refer to related descriptions in another embodiment. In addition, in various embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. A packet sending method, wherein the method is applied to a first node, and the method comprises:
receiving a first packet, wherein the first packet comprises a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and
when a network address of the first node is not the network address of the first intermediate node, sending the first packet; or
when a network address of the first node is the network address of the first intermediate node, updating a network address indicated by the first destination address field from the network address of the first intermediate node to the network address of the destination node based on the second destination address field, to generate a second packet; and sending the second packet.

2. The method according to claim 1, wherein the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

3. The method according to claim 2, wherein the routing header further comprises a routing type field, and the routing type field indicates a type of the routing header.

4. The method according to claim 3, wherein the type of the routing header is that the routing header comprises a source location identifier field, and the source location identifier field is used by the destination node to reversely address the source node.

5. The method according to claim 4, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

6. The method according to any one of claims 1 to 5, wherein the routing header further comprises a third destination address field and a segment left field, the segment left field is set to a first value, the first value corresponds to the third destination address field, and the third destination address field indicates the network address of the first intermediate node; and
the updating a network address indicated by the first destination address field from the network address of the first intermediate node to the network address of the destination node based on the second destination address field comprises:
changing a value of the segment left field from the first value to a second value, and determining that the second value corresponds to the second destination address field; and
updating the network address indicated by the first destination address field from the network address of the first intermediate node to the network address of the destination node based on the second destination address field.

7. The method according to any one of claims 1 to 6, wherein the sending the first packet comprises:
sending the first packet based on a first forwarding entry, wherein the first forwarding entry records a correspondence between the network address of the first intermediate node, an out interface identifier of the first node, a next hop layer 2 identifier of the first node, a transport channel identifier TCID of the first node, and a logical channel identifier LCID of the first node.

8. The method according to any one of claims 1 to 7, wherein the sending a second packet comprises:
sending the second packet based on a second forwarding entry, wherein the second forwarding entry records a correspondence between the network address of the destination node, the out interface identifier of the first node, the next hop layer 2 identifier of the first node, the transport channel identifier TCID of the first node, and the logical channel identifier LCID of the first node.

9. The method according to claim 7 or 8, wherein the first forwarding entry or the second forwarding entry is obtained from a forwarding table, and the forwarding table is obtained based on an adjacency table for the first node and a routing table for the first node.

10. The method according to any one of claims 1 to 9, wherein at least one of a length of the network address of the destination node and a length of the network address of the first intermediate node is 2 bytes.

11. A packet sending method, wherein the method is applied to a source node, and the method comprises:
obtaining a first packet, wherein the first packet comprises a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and
sending the first packet.

12. The method according to claim 11, wherein before the obtaining a first packet, the method further comprises:
sending an address request message to an address resolver node, wherein the address request message carries the network address of the destination node;
receiving an address feedback message sent by the address resolver node, wherein the address feedback message comprises a first mapping relationship between the network address of the destination node and the network address of the first intermediate node, and the first mapping relationship indicates that the destination node is connected to the first intermediate node; and
obtaining the network address of the first intermediate node from the first mapping relationship, wherein the network address of the first intermediate node is used to generate the first packet.

13. The method according to claim 11 or 12, wherein the routing header further comprises a routing type field, and the routing type field indicates a type of the routing header.

14. The method according to claim 13, wherein the type of the routing header is that the routing header comprises a source location identifier field, and the source location identifier field is used by the destination node to reversely address the source node.

15. The method according to claim 14, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

16. The method according to any one of claims 11 to 15, wherein
the sending the first packet comprises:
determining a next hop of the source node based on a forwarding entry, wherein the forwarding entry records a correspondence between the network address of the first intermediate node, an out interface identifier of the source node, a next hop layer 2 identifier of the source node, a transport channel identifier TCID of the source node, and a logical channel identifier LCID of the source node; and
sending the first packet to the next hop of the source node.

17. The method according to claim 16, wherein the forwarding entry is obtained from a forwarding table based on the network address of the first intermediate node, and the forwarding table is obtained based on an adjacency table for the source node and a routing table for the source node.

18. The method according to any one of claims 11 to 17, wherein the routing header further comprises a third destination address field and a segment left field, when the segment left field is set to a first value, the first value corresponds to the third destination address field, and the third destination address field indicates the network address of the first intermediate node; and
the routing header indicates the first intermediate node to change a value of the segment left field from the first value to a second value, and update a network address indicated by the first destination address field to the network address of the destination node based on the second destination address field corresponding to the second value.

19. The method according to any one of claims 11 to 18, wherein at least one of a length of the network address of the destination node and a length of the network address of the first intermediate node is 2 bytes.

20. A packet receiving method, wherein the method is applied to a destination node, and the method comprises:
receiving a first packet, wherein the first packet comprises a packet header and a routing header, a first destination address field in the packet header indicates a network address of the destination node, a second destination address field in the routing header indicates the network address of the destination node, a network address indicated by the first destination address field is updated from a network address of a first intermediate node to the network address of the destination node, and the first intermediate node is an intermediate node that establishes a communication connection to the destination node; and
parsing the first packet.

21. The method according to claim 20, wherein the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

22. The method according to claim 21, wherein the routing header further comprises a routing type field, and the routing type field indicates a type of the routing header.

23. The method according to claim 22, wherein the type of the routing header is that the routing header comprises a source location identifier field, and the source location identifier field is used by the destination node to reversely address the source node.

24. The method according to claim 23, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

25. The method according to any one of claims 20 to 24, wherein when the routing header of the first packet comprises the source location identifier field, the method further comprises:
obtaining, from the source location identifier field, the network address of the second intermediate node connected to the source node; and
sending a third packet based on the network address of the second intermediate node, so that the second intermediate node forwards the third packet to the source node, wherein the third packet is a response to the first packet.

26. The method according to any one of claims 20 to 24, wherein when the routing header of the first packet does not comprise the source location identifier field, the method further comprises:
obtaining, from the address resolver node, the network address of the second intermediate node connected to the source node; and
sending a third packet based on the network address of the second intermediate node, so that the second intermediate node forwards the third packet to the source node, wherein the third packet is a response to the first packet.

27. The method according to any one of claims 20 to 26, wherein the routing header further comprises a third destination address field and a segment left field, when the segment left field is set to a first value, the first value corresponds to the third destination address field, and the third destination address field indicates the network address of the first intermediate node; and
the routing header indicates the first intermediate node to change a value of the segment left field from the first value to a second value, and update the network address indicated by the first destination address field to the network address of the destination node based on the second destination address field corresponding to the second value.

28. The method according to any one of claims 20 to 27, wherein at least one of a length of the network address of the destination node and a length of the network address of the first intermediate node is 2 bytes.

29. A communication apparatus, wherein the apparatus is a first node or the apparatus is comprised in the first node, and the apparatus comprises:
a receiving unit, configured to receive a first packet, wherein the first packet comprises a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and
a sending unit, configured to: when a network address of the first node is not the network address of the first intermediate node, send the first packet; or
a processing unit, configured to: when a network address of the first node is the network address of the first intermediate node, update a network address indicated by the first destination address field from the network address of the first intermediate node to the network address of the destination node based on the second destination address field, to generate a second packet, wherein the sending unit is further configured to send the second packet.

30. The apparatus according to claim 29, wherein the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

31. The apparatus according to claim 30, wherein the routing header further comprises a routing type field, and the routing type field indicates a type of the routing header.

32. The apparatus according to claim 31, wherein the type of the routing header is that the routing header comprises a source location identifier field, and the source location identifier field is used by the destination node to reversely address the source node.

33. The apparatus according to claim 32, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

34. The apparatus according to any one of claims 29 to 33, wherein the routing header further comprises a third destination address field and a segment left field, the segment left field is set to a first value, the first value corresponds to the third destination address field, and the third destination address field indicates the network address of the first intermediate node; and
the processing unit is specifically configured to:
change a value of the segment left field from the first value to a second value, and determine that the second value corresponds to the second destination address field; and
update the network address indicated by the first destination address field from the network address of the first intermediate node to the network address of the destination node based on the second destination address field.

35. The apparatus according to any one of claims 29 to 34, wherein the sending unit is specifically configured to:
send the first packet based on a first forwarding entry, wherein the first forwarding entry records a correspondence between the network address of the first intermediate node, an out interface identifier of the first node, a next hop layer 2 identifier of the first node, a transport channel identifier TCID of the first node, and a logical channel identifier LCID of the first node.

36. The apparatus according to any one of claims 29 to 35, wherein the sending unit is specifically configured to:
send the second packet based on a second forwarding entry, wherein the second forwarding entry records a correspondence between the network address of the destination node, the out interface identifier of the first node, the next hop layer 2 identifier of the first node, the transport channel identifier TCID of the first node, and the logical channel identifier LCID of the first node.

37. The apparatus according to claim 35 or 36, wherein the first forwarding entry or the second forwarding entry is obtained from a forwarding table, and the forwarding table is obtained based on an adjacency table for the first node and a routing table for the first node.

38. The apparatus according to any one of claims 29 to 37, wherein at least one of a length of the network address of the destination node and a length of the network address of the first intermediate node is 2 bytes.

39. A communication apparatus, wherein the apparatus is a source node or the apparatus is comprised in the source node, and the apparatus comprises:
an obtaining unit, configured to obtain a first packet, wherein the first packet comprises a packet header and a routing header, a first destination address field in the packet header indicates a network address of a first intermediate node, a second destination address field in the routing header indicates a network address of a destination node, and the first intermediate node is an intermediate node that establishes a communication connection to the destination node; and
a sending unit, configured to send the first packet.

40. The apparatus according to claim 39, wherein
the sending unit is specifically configured to send an address request message to an address resolver node, wherein the address request message carries the network address of the destination node;
the apparatus further comprises a receiving unit, configured to receive an address feedback message sent by the address resolver node, wherein the address feedback message comprises a first mapping relationship between the network address of the destination node and the network address of the first intermediate node, and the first mapping relationship indicates that the destination node is connected to the first intermediate node; and
the obtaining unit is further configured to obtain the network address of the first intermediate node from the first mapping relationship, wherein the network address of the first intermediate node is used to generate the first packet.

41. The apparatus according to claim 39 or 40, wherein the routing header further comprises a routing type field, and the routing type field indicates a type of the routing header.

42. The apparatus according to claim 41, wherein the type of the routing header is that the routing header comprises a source location identifier field, and the source location identifier field is used by the destination node to reversely address the source node.

43. The apparatus according to claim 42, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

44. The apparatus according to any one of claims 39 to 43, wherein the sending unit is specifically configured to:
determine a next hop of the source node based on a forwarding entry, wherein the forwarding entry records a correspondence between the network address of the first intermediate node, an out interface identifier of the source node, a next hop layer 2 identifier of the source node, a transport channel identifier TCID of the source node, and a logical channel identifier LCID of the source node; and
send the first packet to the next hop of the source node.

45. The apparatus according to claim 44, wherein the forwarding entry is obtained from a forwarding table based on the network address of the first intermediate node, and the forwarding table is obtained based on an adjacency table for the source node and a routing table for the source node.

46. The apparatus according to any one of claims 39 to 45, wherein the routing header further comprises a third destination address field and a segment left field, when the segment left field is set to a first value, the first value corresponds to the third destination address field, and the third destination address field indicates the network address of the first intermediate node; and
the routing header indicates the first intermediate node to change a value of the segment left field from the first value to a second value, and update a network address indicated by the first destination address field to the network address of the destination node based on the second destination address field corresponding to the second value.

47. The apparatus according to any one of claims 39 to 46, wherein at least one of a length of the network address of the destination node and a length of the network address of the first intermediate node is 2 bytes.

48. A communication apparatus, wherein the apparatus is a destination node or the apparatus is comprised in the destination node, and the apparatus comprises:
a receiving unit, configured to receive a first packet, wherein the first packet comprises a packet header and a routing header, a first destination address field in the packet header indicates a network address of the destination node, a second destination address field in the routing header indicates the network address of the destination node, a network address indicated by the first destination address field is updated from a network address of a first intermediate node to the network address of the destination node, and the first intermediate node is an intermediate node that establishes a communication connection to the destination node; and
a processing unit, configured to parse the first packet.

49. The apparatus according to claim 48, wherein the network address of the first intermediate node is obtained by a source node from an address resolver node, the source node is a start sending node of the first packet, the address resolver node stores a first mapping relationship between the network address of the destination node and the network address of the first intermediate node, and the first mapping relationship indicates that the destination node is connected to the first intermediate node.

50. The apparatus according to claim 49, wherein the routing header further comprises a routing type field, and the routing type field indicates a type of the routing header.

51. The apparatus according to claim 50, wherein the type of the routing header is that the routing header comprises a source location identifier field, and the source location identifier field is used by the destination node to reversely address the source node.

52. The apparatus according to claim 51, wherein
when the source node is an end node in a network, the source location identifier field indicates a network address of a second intermediate node, wherein the second intermediate node is an intermediate node that establishes a communication connection to the source node; or
when the source node is an intermediate node in a network, the source location identifier field indicates a network address of the source node.

53. The apparatus according to any one of claims 48 to 52, wherein the apparatus further comprises a sending unit;
the processing unit is configured to: when the routing header of the first packet comprises the source location identifier field, obtain, from the source location identifier field, the network address of the second intermediate node connected to the source node; and
the sending unit is configured to send a third packet based on the network address of the second intermediate node, so that the second intermediate node forwards the third packet to the source node, wherein the third packet is a response to the first packet.

54. The apparatus according to any one of claims 48 to 52, wherein the apparatus further comprises a sending unit;
the processing unit is configured to: when the routing header of the first packet does not comprise the source location identifier field, obtain, from the address resolver node, the network address of the second intermediate node connected to the source node; and
the sending unit is configured to send a third packet based on the network address of the second intermediate node, so that the second intermediate node forwards the third packet to the source node, wherein the third packet is a response to the first packet.

55. The apparatus according to any one of claims 48 to 54, wherein the routing header further comprises a third destination address field and a segment left field, when the segment left field is set to a first value, the first value corresponds to the third destination address field, and the third destination address field indicates the network address of the first intermediate node; and
the routing header indicates the first intermediate node to change a value of the segment left field from the first value to a second value, and update the network address indicated by the first destination address field to the network address of the destination node based on the second destination address field corresponding to the second value.

56. The apparatus according to any one of claims 48 to 55, wherein at least one of a length of the network address of the destination node and a length of the network address of the first intermediate node is 2 bytes.

57. A communication apparatus, comprising a processor, a transceiver, and a memory, wherein the memory is configured to store instructions, the processor is configured to execute the instructions, and the transceiver is configured to communicate with another device under control of the processor; and when the processor executes the instructions, the method according to any one of claims 1 to 10, 11 to 19, or 20 to 28 is performed.

58. A communication system, wherein the communication system comprises at least a first apparatus, a second apparatus, and a third apparatus, the first apparatus is configured to perform the method according to any one of claims 1 to 10, the second apparatus is configured to perform the method according to any one of claims 11 to 19, and the third apparatus is configured to perform the method according to any one of claims 20 to 28.

59. A computer-readable storage medium, wherein the computer-readable storage medium stores a computer program, and the computer program is executed by a processor to implement the method according to any one of claims 1 to 10, 11 to 19, or 20 to 28.

60. A computer program product, wherein when the computer program product runs on a processor, an apparatus is enabled to perform the method according to any one of claims 1 to 10, 11 to 19, or 20 to 28.
